# FASCICULE DE BREVET EUROPEEN

(11) **EP 3 473 357 B1**
(45) Date de publication et mention de la délivrance du brevet: **06.01.2021**
(21) Numéro de dépôt: 18201337.5
(22) Date de dépôt: 18.10.2018
(51) Int. Cl.: B22F 1/00, B22F 3/00, B22F 3/10, B33Y 70/00, B33Y 10/00

(54) **PATE DESTINÉE A ETRE UTILISÉE DANS UN PROCEDE DE STEREOLITHOGRAPHIE POUR LA FABRICATION DE PIÈCES EN TITANE**
PASTE ZUR VERWENDUNG IN EINEM STEREOLITHOGRAPHIEVERFAHREN ZUR HERSTELLUNG VON TITANTEILEN
PASTE FOR USE IN A STEREOLITHOGRAPHY METHOD FOR THE MANUFACTURE OF TITANIUM PARTS

(30) Priorité: 19.10.2017 FR 1759841
(43) Date de publication de la demande: 24.04.2019
(73) Titulaire: Commissariat à l'énergie atomique et aux énergies alternatives, 75015 Paris (FR); Prodways, 78130 Les Mureaux (FR)
(72) Inventeur: ROUMANIE, Maryline, 38500 COUBLEVIE (FR); BADEV, Aleksandar, 78600 MAISONS-LAFITTE (FR)
(74) Mandataire: Brevalex

(56) Documents cités:
- US-A1- 2002 176 793

## Description

### DOMAINE TECHNIQUE ET ÉTAT DE LA TECHNIQUE ANTÉRIEURE

L'invention concerne une pâte destinée à être utilisée dans un procédé de stéréolithographie pour fabriquer une pièce en titane. L'invention concerne également un procédé de fabrication d'une pièce en titane par stéréolithographie à partir d'une telle pâte.

Le titane et ses alliages sont connus pour avoir de bonnes propriétés mécaniques, une grande résistance à la corrosion, un faible module d'Young, une faible densité et une bonne biocompatibilité. Ces métaux répondent aux contraintes imposées dans de nombreux domaines, comme par exemple, dans l'aéronautique, l'aérospatiale ou encore dans le domaine médical, en particulier, celui des prothèses.

Classiquement, les pièces en titane sont obtenues par fabrication additive par fusion sélective par laser (SLM). Il s'agit d'une des techniques les plus matures d'un point de vue industriel. Cette technologie permet de réaliser des pièces en titane depuis une dizaine d'années. Cependant, cette technique comme tout autre technique d'impression 3D par fusion présente les inconvénients suivants :
- la présence de contraintes résiduelles dans les pièces, suite à la fabrication, ce qui nécessite de réaliser un traitement thermique ultérieur,
- une mauvaise qualité de surface qui nécessite une étape de polissage,
- une distribution granulométrique spécifique des poudres qui entraine un coût non négligeable sur l'achat des matières premières,
- une gestion et une manipulation des poudres, pendant les étapes de polissage et de nettoyage, qui nécessite des précautions spécifiques de sécurité et pour la santé.

Afin de remédier à ces problématiques, la fabrication de pièces métalliques par stéréolithographie (SLA) s'est développée. Cette technique consiste à déposer sur un support une première couche de pâte, contenant une poudre métallique, une résine photopolymérisable, et un photoamorceur, et à polymériser cette couche dans une ou des zones choisies par l'action d'un rayonnement approprié généralement UV (typiquement 365nm). Il est ensuite superposé à cette première couche, une deuxième couche qui est traitée selon le même principe et ses opérations sont répétées jusqu'à former une pièce polymérisée en trois dimensions de la forme voulue.

Cependant, les particules de titane se couvrent naturellement d'une fine couche d'oxyde de titane, dont l'indice de réfraction est de 3,87, ce qui fait que les particules de titane absorbent le rayonnement ultra-violet. Lorsque l'indice de réfraction est très grand par rapport à celui des résines classiques (par exemple 1,5 pour une résine acrylate), ceci conduit à une compétition entre, d'une part, l'absorption de la lumière UV par la poudre et, d'autre part, l'activation des photoamorceurs présents dans la formulation et donc la réticulation des acrylates. Les résines chargées en particules de titane présentent donc une faible réactivité. Pour améliorer la réactivité de la pâte, il est possible de rajouter un composé particulier qui modifie les propriétés optiques de la poudre et le comportement de la pâte face aux ultra-violets.

Par exemple, dans le document FR-A-2811922, différentes pâtes destinées à être utilisées dans des procédés SLA sont décrites. Les pâtes comportent un liant constitué d'au moins une résine photopolymérisable, ayant une viscosité inférieure à 4000 mPa.s, un photo-amorceur et une poudre métallique. La poudre métallique peut être, par exemple, en acier inoxydable, en titane, ou en alliage de titane. Pour améliorer la réactivité de la pâte, du polyéthylène ou du polyamide peuvent être ajoutés. La réactivité des différentes pâtes a été mesurée, mais la réactivité de la pâte contenant la poudre de titane pur n'a pas été mesurée, ce qui semble indiquer que soit la réactivité est trop longue, et donc que le procédé n'est pas industrialisable, soit la pièce en titane n'a pas pu être réalisée.

### EXPOSÉ DE L'INVENTION

C'est, par conséquent, un but de la présente invention de proposer une pâte remédiant aux inconvénients de l'art antérieur et permettant de fabriquer facilement des pièces en titane à grande échelle.

Ce but est atteint par une pâte destinée à être utilisée dans un procédé de stéréolithographie pour fabriquer une pièce en titane, comprenant une poudre de particules de titane, un ou plusieurs précurseurs polymérisables d'une première résine, un photoamorceur et un additif optique,
l'additif optique étant choisi parmi un polythiophène, un alcool polyvinylique, un polypropylène, et une seconde résine, préalablement réticulée et broyée.

La pâte se distingue fondamentalement de l'art antérieur par la nature de l'additif optique qui favorise la diffusion de la lumière au cœur de la couche de pâte, jusqu'aux photoamorceurs, ce qui améliore la réactivité de la pâte.

Grâce à la présence de l'un de ces additifs optiques particuliers, il est possible de fabriquer des pièces en titane qui ne pourraient pas l'être avec les procédés de l'art antérieur pour lesquels la réactivité est insuffisante (typiquement supérieure à 30 secondes). La pâte, utilisée dans le procédé de l'invention, présente une réactivité inférieure à 30s, voire inférieure à 2s selon la nature de l'additif optique, ce qui permet de concurrencer, en terme de cadence, les procédés de type SLM, tout en évitant les inconvénients précités du procédé SLM. Il est, par exemple, possible d'obtenir des couches réticulées de 50µm en 0,5s en fonction du choix de l'additif.

La pâte est obtenue en mélangeant notamment un ou plusieurs précurseurs polymérisables d'une résine, qui sont visqueux, ou liquides, et une poudre de titane, ce qui assure une parfaite homogénéité du mélange. Les étapes de manipulation des poudres sont réduites et les risques écologiques et de santé liés à leur manipulation limités.

L'additif optique représente de 0,1% à 20% en poids par rapport à la poudre de titane. Avec de telles proportions, la quantité d'additif optique est suffisante pour diffuser la lumière et la pièce obtenue présente une faible porosité.

Avantageusement, l'additif optique est sous forme de particules, les particules ayant une plus grande dimension inférieure à 20µm, et de préférence inférieure ou égale à 10µm, et encore plus préférentiellement inférieure ou égale à 2µm. La pièce finale obtenue présente une faible porosité.

Avantageusement, les particules de titane ont une plus grande dimension inférieure à 45µm, et de préférence inférieure à 25µm.

Avantageusement, les particules de titane sont sphériques. Avec des particules sphériques, la réactivité des résines photosensibles est améliorée et la pièce finale présente une meilleure compacité et une plus forte densité.

Avantageusement, la poudre de titane représente au moins 35% volumique de la pâte, et de préférence de 40% à 60% volumique. La proportion de poudre de titane par rapport à la résine sera ajustée en fonction des propriétés mécaniques du matériau composite recherchées. Les pourcentages volumiques s'entendent ici et par la suite par rapport au volume total de la pâte.

Avantageusement, le ou les précurseurs polymérisables de la première résine sont de type acrylate, uréthane acrylate, polyétheracrylate modifié par une amine, époxyacrylate ou polyesteracrylate.

Avantageusement, la seconde résine est de type acrylate. La seconde résine est facilement éliminée lors des traitements thermiques.

Avantageusement, la pâte a une viscosité supérieure ou égale à 10Pa.s à une vitesse de cisaillement de 100s⁻¹, à 25°C. La pâte est facile à étaler et suffisamment visqueuse pour former une couche homogène.

Avantageusement, la pâte comprend :
- 40% à 50% volumique de poudre de particules de titane,
- 40% à 60% volumique d'un ou plusieurs précurseurs polymérisables d'une première résine,
- 0,1% à 10% volumique de photoamorceur,
- 0,5% à 10% en poids par rapport à la poudre de titane d'additif optique, l'additif optique étant de préférence du polypropylène, ou une seconde résine préalablement réticulée et broyée.

L'invention concerne également un procédé de fabrication d'une pièce en titane par stéréolithographie à partir d'une pâte telle que définie précédemment. Le procédé présente les avantages liés à la pâte.

Le procédé de fabrication d'une pièce en titane comprend au moins les étapes successives a), b), c) suivantes :
a) Mise en forme d'une pièce par stéréolithographie, la mise en forme étant réalisée en :
   a1) formant une couche de pâte, telle que définie précédemment,
   a2) polymérisant le ou les précurseurs polymérisables de la première résine,
      les étapes a1) et a2) formant un cycle pouvant être répété plusieurs fois,
b) réalisation d'un premier traitement thermique à une première température T_{d} de manière à éliminer la première résine (étape de déliantage),
c) réalisation d'un second traitement thermique à une deuxième température T_{f}, supérieure à la première température T_{d}, de manière à fritter les particules de titane pour obtenir une pièce en titane (étape de frittage).

Le procédé de fabrication d'une pièce en titane est simplifié et la pièce obtenue est plus homogène. La pièce obtenue, à l'issue de la mise en forme par stéréolithographie, est solide, elle comprend une première résine dans laquelle est dispersée la poudre de titane. Le procédé d'élaboration de type stéréolithographie, permet d'élaborer des pièces de formes variées et complexes. De plus, contrairement au procédé SLM, la fabrication des pièces en titane par SLA ne passe pas par une étape de mélange de différentes poudres.

Avantageusement, l'étape a2) est réalisée sous irradiation UV pendant une durée inférieure à 30s, de préférence inférieure à 10s, et encore plus préférentiellement inférieure à 2s.

Avantageusement, la couche de pâte formée à l'étape a1) à une épaisseur allant de 20µm à 200µm.

Avantageusement, la couche de pâte déposée a une épaisseur allant de 30µm à 50µm et l'irradiation UV est réalisée pendant une durée de 0,5s à 1s.

Avantageusement, l'étape a2) est réalisée avec un laser ou par traitement numérique de la lumière (DLP pour « digital light processing »). L'utilisation d'une source lumineuse DLP permet d'illuminer en une seule fois toute la pièce, ce qui simplifie le procédé, rend l'illumination et donc la réticulation plus homogène et améliore la cadence de production.

Avantageusement, la température T_{d} est comprise dans la gamme allant de 300°C à 700°C et la température T_{f} est comprise dans la gamme allant de 1000°C à 1400°C. La température T_{d} dépend des liants mis en œuvre. La température de frittage du titane est spécifique, elle dépend de la méthode de préparation de la poudre, de la taille des particules et des adjuvants qui peuvent être ajoutées.

### BRÈVE DESCRIPTION DES DESSINS

La présente invention sera mieux comprise sur la base de la description qui va suivre et des dessins en annexe sur lesquels:
- la figure 1 est un graphique représentant l'épaisseur de résine réticulée en fonction du temps d'exposition, pour des compositions de pâte comprenant différents additifs optiques et pour une composition de pâte dépourvue d'additif optique,
- les figures 2A et 2B sont des photographies d'une pièce en titane, avant et après l'étape de frittage, obtenue selon un mode de réalisation de l'invention.

### EXPOSÉ DÉTAILLÉ DE MODES DE RÉALISATION PARTICULIERS

L'invention porte sur un procédé de fabrication d'une pièce en titane. Le procédé comprend au moins les étapes successives suivantes :
a) Mise en forme d'une pièce par stéréolithographie, la mise en forme étant réalisée en :
   a1) formant une couche de pâte, comprenant une poudre de particules de titane, un ou plusieurs précurseurs polymérisables d'une première résine, un photoamorceur, et un additif optique,
   a2) polymérisant le ou les précurseurs polymérisables de la première résine de manière à former la première résine,
      les étapes a1) et a2) formant un cycle pouvant être répété plusieurs fois,
b) Réalisation d'un premier traitement thermique à une première température T_{d} sur la pièce de manière à éliminer la première résine,
c) Réalisation d'un second traitement thermique à une deuxième température T_{f}, supérieure à la première température T_{d}, de manière à fritter les particules de titane pour obtenir une pièce en titane.

### Mise en forme de la pièce :

La pièce est mise en forme, à l'étape a), par stéréolithographie, c'est-à-dire qu'elle est obtenue par polymérisation successives de plusieurs couches de pâte.

La pâte comprend la poudre de titane, un ou plusieurs précurseurs polymérisables d'une première résine (aussi appelée liant polymérique ou liant organique), un ou plusieurs photo-initiateurs (ou photo-amorceurs) et un additif optique. La pâte est visqueuse, voire éventuellement liquide, et ses constituants sont, avantageusement, répartis d'une manière homogène.

L'additif optique permet de diffuser et/ou de réfléchir la lumière au sein de la couche pâte et donc d'améliorer la réactivité de la résine. L'additif optique est choisi parmi les polythiophènes, une seconde résine préalablement réticulée et broyée, un polypropylène, et un l'alcool polyvinylique.

De préférence, l'additif optique est un polypropylène ou une seconde résine préalablement réticulée et broyée.

Le polypropylène peut être choisi parmi les polypropylènes classiquement utilisés pour les techniques de plasturgie, comme l'injection. A titre illustratif, on peut choisir un polypropylène commercialisé sous le nom HP500N par la société Basel ou encore un polypropylène commercialisé par la société Borealis.

Le polypropylène peut être fonctionnalisé. Par exemple, il est fonctionnalisé avec des groupements permettant une meilleure diffusion du rayonnement incident.

La seconde résine est de préférence de type acrylate.

Avantageusement, lorsque l'additif optique est un polymère ou une résine, il sera éliminé, lors de l'étape de déliantage, ce qui améliorera la compacité, la densité et la qualité de la pièce finale. De préférence, on choisira le polypropylène qui laisse très peu de résidus carbonés après l'étape de déliantage.

L'additif optique représente de 0,1% à 20% en poids par rapport aux particules de titane pour avoir une pièce dense. Au-delà de 20%, après déliantage et frittage, on obtient une pièce poreuse.

Lorsque l'additif est sous forme de particules, celles-ci ont, de préférence, des dimensions inférieures à celle des particules de titane pour limiter la porosité dans les pièces finales dans l'idée d'avoir des pièces denses. Par exemple, les particules d'additif ont une plus grande dimension au moins deux fois plus petite, et de préférence au moins dix fois plus petite, que la plus grande dimension des particules de la poudre métallique ou céramique. Par exemple, les particules d'additif optique ont des dimensions inférieures ou égales à 10µm, par exemple de l'ordre de 1-2µm pour limiter la porosité de la pièce finale ou, par exemple, de l'ordre de 8µm pour avoir un matériau légèrement poreux. De préférence, les particules d'additif optique ont une plus grande dimension inférieure ou égale à 2µm.

Les particules de titane formant la poudre peuvent être oxydées en surface, i.e. une couche d'oxyde de titane peut recouvrir les particules de titane. La couche a une épaisseur de quelques nanomètres, de 1 à 5nm par exemple.

De préférence, la poudre de titane présente dans la pâte est une poudre de titane pur (éventuellement recouvert d'oxyde de titane) pour former des pièces de titane pur. Elle ne comprend pas d'autres éléments métalliques.

La poudre de titane représente au moins 35% volumique pour obtenir une pièce dense après traitement thermique. De préférence, la poudre de titane représente de 35% à 65% volumique, par exemple de 40% à 60% volumique, et de préférence de 35% à 55% volumique de la pâte. Ce pourcentage est aussi appelé taux de charge. De tels taux de charge conduisent à une bonne répartition de la poudre de titane au sein du polymère, et à une quantité suffisante de précipité, répartis de façon homogène au sein de la matrice de titane. En fonction des propriétés mécaniques recherchées, l'homme du métier choisira le taux de charge adapté.

Les particules formant la poudre de titane ont, de préférence, un diamètre inférieur à 50µm, par exemple de 49µm, encore plus préférentiellement inférieur à 45µm, et encore plus préférentiellement inférieur à 30µm. Par exemple, les particules ont un diamètre inférieur à 25µm. Les particules ont un diamètre supérieur à 5µm, par exemple supérieur ou égal à 8µm. Le diamètre des particules va, par exemple de 5µm à 25µm ou encore de 8µm à 25µm. Les particules ont, par exemple, un diamètre de 8µm, de 14µm ou de 24µm. Les particules en céramique peuvent avoir des dimensions inférieures, par exemple inférieures à 5µm.

Il est préférable que la taille des particules soit inférieure à l'épaisseur de la couche formée lors de l'étape a1).

De préférence, les particules sont sphériques pour, d'une part, conférer à la résine une meilleure réactivité et, d'autre part, pour avoir une pièce finale ayant une meilleure compacité.

La pâte comprend un ou plusieurs précurseurs de la première résine. Par précurseur, on entend des monomères et/ou des oligomères et/ou des pré-polymères menant à la formation de la première résine. Les précurseurs sont photosensibles ou photopolymérisables. Ils pourraient également être polymérisés sous l'action de la chaleur. A titre illustratif, pour le procédé SLA, peuvent être cités les monomères et oligomères de type époxyde (aussi appelé « époxy »), acrylate, uréthane acrylate, polyéther acrylate, polyéther acrylate modifié par une amine, époxy acrylate ou encore polyesteracrylate. Il peut aussi s'agir, par exemple, de morpholinobutyrophénone, de phénylacétophénone, ou encore de phosphine oxyde.

Avantageusement, on choisira un acrylate fonctionnel, par exemple un uréthane acrylate, un polyetheracrylate modifié par une amine, un époxyacrylate ou encore un polyesteracrylate, ou un mélange de ceux-ci. Ils contribuent au mouillage de la résine sur les particules.

Avantageusement, la pâte comprend également un diluant réactif de type acrylique pour ajuster la viscosité et le taux de degré de réticulation. Le diluant réactif acrylique peut être un composé tel que défini dans la formule suivante : 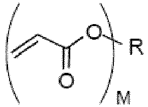 avec :
R un groupe polyvalent, par exemple, de type hydrocarbure, polyalkylether, ou polyol alkoxylé ;
M un nombre entier, dépendant du groupe R.

A titre illustratif, le diluant réactif peut être choisi parmi le 1,6-hexanediol diacrylate (HDDA), le Trimethylolpropane triacrylate (TMPTA), le tripropylglycoltriacrylate (TPGDA), le glycéryl triacrylate propoxylé (GPTA).

La pâte comprend, en outre, un ou plusieurs initiateurs de polymérisation. Dans le cas de la stéréolithographie, l'initiation de la polymérisation des acrylates est obtenue par l'absorption de lumière ultraviolette. Les amorceurs des acrylates sont de type radicalaire et leur choix est guidé principalement par la longueur d'onde de la source lumineuse qu'ils doivent absorber. Leur sélection relève clairement des compétences de l'homme du métier de même que l'ajustement de leur quantité.

Il est rappelé que la gamme UV va d'une longueur d'onde 100nm à 450nm. Les UVC permettent de réticuler en surface des matériaux, les UVB pénètrent dans la couche et les UVA compris entre 315nm et 400nm permettent de réticuler une couche épaisse ayant, par exemple, une épaisseur supérieure à 20 µm et inférieure à 20mm. Dans le cadre de l'invention, la source lumineuse a, avantageusement, une longueur d'onde fixée à 365nm.

Des photoamorceurs convenant pour les précurseurs de type acrylate sont de la famille des acétophénones ou des alkoxyacétophénones comme le 2,2'-diméthoxy-2-phénylacétophénone (par exemple, l'Irgacure 651 de IGM) ; de la famille des alkylaminoacétophénones comme la 2-Benzyl-2-(diméthylamino)-4'-morpholinobutyrophénone (par exemple, Irgacure 369 de IGM) ou la 2-Méthyl-4'-(méthylthio)-2-morpholinopropiophénone (par exemple, Irgacure 907 de IGM); ou de la famille des hydroxyalkylphénones comme la 2-hydroxy-2-méthyl-1-phényl-propane-1-one (par exemple, Darocure 1173 de IGM). Il peut également s'agit de dérivé de phosphine-oxyde tel que le Phenylbis(2,4,6-trimethylbenzoyl)phosphine oxide (par exemple, Irgacure 819 de IGM). Il est préférable d'utiliser des photoamorceurs qui agissent en profondeur. L'action des photoamorceurs (réaction en profondeur ou en surface) peut être identifiée par l'homme de l'art.

D'autres éléments peuvent être ajoutés à la pâte, comme un agent mouillant, un agent de rhéologie, etc.

Les différents constituants sont mélangés pour obtenir une pâte chargée homogène. La pâte peut être homogénéisée au tricylindre.

L'homme du métier choisira la viscosité de la pâte, par exemple, en fonction des techniques de dépôt utilisée.

Le comportement à seuil de la pâte est, avantageusement, de type rhéofluidifiant Herschel Bulkley (n<1) ou fluide de Bingham.

On pourra choisir une pâte ayant une viscosité supérieure à 5Pa.s et de préférence supérieure ou égale à 10Pa.s à 100s⁻¹ à 25°C. La viscosité de la pâte peut être mesurée avec un dispositif de type plan-plan ou cône-plan. La viscosité est, par exemple, mesurée avec un rhéomètre MCR300.

A titre illustratif, la viscosité de la pâte peut être mesurée avec un dispositif tête cône/plan CP50/1, ayant une distance entre les plateaux de 100µm, et en effectuant un pré-cisaillement de 3min à 2s⁻¹, puis une montée en 5min avec des taux de cisaillement de 2 -200s⁻¹ et retour en 5min jusqu'à 2s⁻¹.

Avantageusement, la pâte est élaborée à température ambiante (20-25°C).

La pâte comprend par exemple :
- 40% à 50% volumique de poudre de titane,
- 0,1% à 10% et, de préférence, de 1% à 10% volumique d'un ou plusieurs photoamorceurs,
- de 40% à 60% volumique d'une ou plusieurs résines polymérisables, par exemple un mélange de résine acrylate, uréthane acrylate et acrylate modifié par une amine,
- 0,5% à 10% et de préférence de 2% à 10% en poids par rapport à la poudre de titane d'additif optique.

La pièce est réalisée en formant une succession de couches de pâte allant de 20µm à 100µm d'épaisseur (étape a1), polymérisées par exemple avec un laser ou par traitement numérique de la lumière (ou DLP pour « digital light processing ») (étape a2).

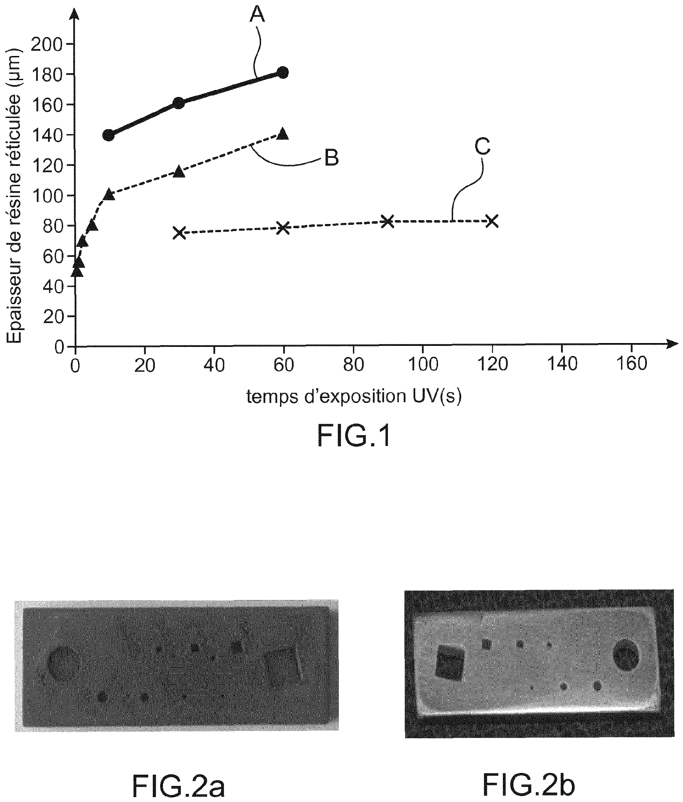

Comme représenté sur le graphique de la figure 1, l'ajout d'un additif optique (courbe A : une résine acrylate réticulée et broyée ; courbe B : particules de propylène) dans la formulation d'une pâte telle que définie ci-dessous, et contenant une poudre de titane, permet d'améliorer sa réactivité. Avec l'ajout d'un additif optique, des réactivités inférieures à 30s sont obtenues. Il est, par exemple, possible de réticuler des couches de pâte de 50µm en 0,5s et d'avoir une cohésion accrue entre les couches.

Sans additif optique (courbe C), il n'est pas possible d'avoir une réactivité inférieure à 30s. Les réactivités ne sont pas suffisantes pour pouvoir mesurer des épaisseurs réticulées.

Les pièces formées par SLA peuvent présenter des formes complexes. Comme représenté sur les figures 2A et 2B, la pièce peut présenter des cavités de tailles et formes variées.

La pièce peut être mise en forme, par stéréolithographie, à température ambiante.

### Traitements thermiques de la pièce :

Lors de la mise en forme (étape a), la résine sert de liant à la pièce crue (aussi appelée pièce verte) et assure la cohésion.

Ce liant est ensuite éliminé lors de l'étape de déliantage (étape b), pour obtenir une pièce déliantée, dite pièce brune, sous forme de squelette de titane.

Puis la pièce est frittée pour obtenir la pièce finale.

Le traitement thermique appliqué à la pièce formée de particules de titane dispersées dans la résine est, avantageusement, réalisé avec de faibles rampes de température (inférieures ou égales à 3°C/min, et de préférence de l'ordre de 1°C/min) pour éviter toute altération de la pièce et l'apparition de fissures. Une telle montée en température est, avantageusement, réalisée sur une plage de 50°C avant la température de déliantage T_{d}. Elle peut également être réalisée sur une plage plus grande, par exemple sur une plage, de 100°C, de 200°C ou encore de la température ambiante (20-25°C) à la température de déliantage. A titre illustratif, si la température de déliantage est de 400°C, une faible montée en température, comme par exemple une montée en température de 1°C/min, sera réalisée de 350°C à 400°C.

Un ou plusieurs paliers en température seront, avantageusement, réalisés avant la température T_{d} de déliantage. Avantageusement, un palier peut être réalisé à T₁=T_{d}-50°C et/ou T₂=T_{d}-100°C. La durée des paliers est d'au moins 30 minutes, de préférence, d'au moins une heure, et encore plus préférentiellement d'au moins deux heures. Les paliers peuvent avoir des durées différentes. Par exemple, pour une température de déliantage de 450°C, un premier palier peut être réalisé à 350°C pendant 30 minutes et un deuxième palier peut être réalisé à 400°C pendant 2h.

Un palier en température est, avantageusement, réalisé à la température T_{f} pendant une durée d'au moins 30 minutes, et de préférence, d'au moins une heure, et encore plus préférentiellement pendant une durée d'au moins deux heures.

Les températures T_{d} de déliantage et T_{f} de frittage seront définies par l'homme du métier en fonction des résines et des particules de titane choisies.

L'homme du métier pourra également choisir le nombre de paliers ainsi que la température et la durée des paliers. Ces paramètres peuvent également être déterminés en fonction du taux de charge et de la morphologie des poudres.

Par exemple, la température de déliantage T_{d} est comprise dans la gamme allant de 300°C à 700°C, de préférence de 300°C à 600°C, et encore plus préférentiellement de 400°C à 550°C. La température de déliantage est généralement déterminée par Analyse thermogravimétrique (ATG) puis le cycle rampe et temps de pallier est ajusté pour limiter les fissurations dues aux dégagements gazeux des liants.

La température de frittage T_{f} est comprise dans la gamme allant de 1000°C à 1400°C, et avantageusement de 1200°C à 1300°C. Elle est par exemple de 1250°C. Classiquement, la température de frittage est évaluée par dilatométrie.

Les traitements thermiques peuvent être réalisés sous vide, par exemple, à une pression inférieure à 1.10⁻⁵mbar ou encore sous argon, à la pression atmosphérique (environ 1bar) ou à une pression partielle de 400 à 800mbar.

Avantageusement, une rampe de température en descente est également réalisée. Par exemple, il s'agit d'une rampe en température inférieure à 5°C/min ou selon une variante d'une rampe en température de 5 à 10°C/min.

Les pièces en titane, jusque-là, essentiellement limitées au domaine de l'aérospatial, à cause des coûts pourront trouver, grâce au procédé de l'invention, des applications dans de nouveaux domaines d'application, comme l'automobile, les équipements industriels, ou encore les loisirs.

### Exemple illustratif et non limitatif d'un mode de réalisation d'une pièce en titane par SLA :

Dans cet exemple, une pièce en titane est réalisée. En premier lieu, une pâte est élaborée. Elle comprend :
   - 5% volumique de 1,6-hexanediol diacrylate (HDDA),
   - 21% volumique de polyéther acrylate modifié par une amine (PEAAM),
   - 20% volumique d'oligomère uréthane acrylate,
   - 2% volumique de 2,2-Dimethoxy-2-phenylacetophénone,
   - 2% volumique de Phenylbis (2,4,6-trimethyl-benzoyl)phosphine oxide,
   - 45% volumique de particules de titane ayant une granulométrie inférieure à 45µm,
   - un additif optique : des particules de Polypropylène de 1µm à 2µm de diamètre, représentant 5% en poids par rapport aux particules de titane.

Le polypropylène est classiquement commercialisé soit sous forme de granulés soit sous forme de particules (poudre). Les granulés ont, généralement, une dimension de l'ordre de quelques millimètres, par exemple 3-5mm. La taille médiane (d50) des particules va de 8 à 12µm, et le d90 est de 31µm. Ces dimensions sont du même ordre de grandeur voire supérieures à celles des particules de titane, ce qui peut après traitement thermique (étape de déliantage) créer des pores de tailles importantes dans la pièce. La taille des particules de PP utilisées est donc réduite jusqu'à être inférieure à 2µm.

Cette réduction de taille peut être obtenue en introduisant les particules ou des granulés de polypropylène dans un ballon contenant du xylène, et placé dans un montage à reflux. La température est augmentée jusqu'à 120°C, jusqu'à ce que le liquide initialement trouble devienne limpide. Les particules métalliques sont ensuite ajoutées en quantité suffisante pour obtenir le pourcentage massique souhaité en PP dans les particules métalliques. Le mélange est ensuite homogénéisé 1h à 120°C (pour la poudre) et à 140°C (pour les granulés) puis refroidi. La suspension est filtrée et séchée à l'étuve pour éliminer le solvant. Le produit obtenu est sous la forme d'un agglomérat. Celui-ci est broyé à l'aide d'un mortier afin d'obtenir un mélange poudre d'intérêt /PP. Finalement, la poudre est introduite dans une résine photoréticulable. La formulation ainsi obtenue est réactive et stable dans le temps

La pièce en titane a été réalisée par SLA au moyen d'une machine PRODWAYS nommée V6000. La pièce est formée d'une succession de couche de 30µm d'épaisseur. Entre chaque couche, un flash UV, réalisé par DLP (« digital light processing »), d'une durée de 1 seconde permet la réticulation des polymères et donne la tenue mécanique à la pièce. La figure 2A est une photographie d'une des pièces réalisées par SLA, avant les traitements thermiques.

Les deux traitements thermiques sont réalisés sur la pièce verte pour éliminer le liant et fritter la pièce (1250°C sous argon). La pièce obtenue ne présente pas de défauts visibles à l'œil nu (figure 2B).

En parallèle des polyéthylènes LLDPE et HDPE, hydrocarbures de poids moléculaires élevés ont été testés. Ces deux polymères sont utilisés en injection. Le LLDPE (polyéthylène à basse densité linéaire) a un nombre important de branches courtes et une densité de 0,91 à 0,94 g/cm³. Le HDPE (polyéthylène à haute densité) présente une faible ramification de ses chaînes polymères et une densité de 0,941 au 0,965 g/cm3.

Ces polyéthylènes sous forme de granulés sont préparés selon le même protocole que celui utilisé pour les granulés de PP.

Les agglomérats obtenus après séchage sont soumis à une étape de broyage à sec, dans un bol de broyage, pour obtenir des poudres. Les poudres sont ensuite introduites dans des résines photoréticulables. Les formulations durcissent dans le pot (1 nuit). Ces formulations ne sont donc pas stables dans le temps en comparaison avec les formulations contenant le mélange poudre d'intérêt / PP.

## Revendications

1. Pâte, destinée à être utilisée dans un procédé de stéréolithographie pour fabriquer une pièce en titane, comprenant une poudre de particules de titane, un ou plusieurs précurseurs polymérisables d'une première résine, un photoamorceur et un additif optique,
l'additif optique étant choisi parmi un polythiophène, un alcool polyvinylique, un polypropylène, et une seconde résine de type acrylate, préalablement réticulée et broyée,
l'additif optique représentant de 0,1% à 20% en poids par rapport à la poudre de titane.

2. Pâte selon la revendication 1, **caractérisée en ce que** l'additif optique est sous forme de particules, les particules ayant une plus grande dimension inférieure à 20µm, et de préférence inférieure ou égale à 10µm.

3. Pâte selon la revendication précédente, **caractérisée en ce que** l'additif optique est sous forme de particules, les particules ayant une plus grande dimension inférieure ou égale à 2µm.

4. Pâte selon l'une quelconque des revendications précédentes, **caractérisée en ce que** l'additif optique est du polypropylène.

5. Pâte selon l'une quelconque des revendications précédentes, **caractérisée en ce que** les particules de titane ont une plus grande dimension inférieure à 45µm, et de préférence inférieure à 25µm.

6. Pâte selon l'une quelconque des revendications précédentes, **caractérisée en ce que** la poudre de titane représente au moins 35% volumique de la pâte, et de préférence de 40% à 60% volumique.

7. Pâte selon l'une quelconque des revendications précédentes, **caractérisée en ce que** le ou les précurseurs polymérisables de la première résine sont de type acrylate, uréthane acrylate, polyétheracrylate modifié par une amine, époxyacrylate ou polyesteracrylate.

8. Pâte selon l'une quelconque des revendications précédentes, **caractérisée en ce qu'**elle comprend :
- 40% à 50% volumique de poudre de particules de titane,
- 40% à 60% volumique d'un ou plusieurs précurseurs polymérisables d'une première résine,
- 0,1% à 10% volumique de photoamorceur,
- 0,5% à 10% en poids par rapport à la poudre de titane d'additif optique, l'additif optique étant de préférence du polypropylène, ou une seconde résine de type acrylate préalablement réticulée et broyée.

9. Procédé de fabrication d'une pièce en titane comprenant au moins les étapes successives a), b), c) suivantes :
a) Mise en forme d'une pièce par stéréolithographie, la mise en forme étant réalisée en :
a1) formant une couche de pâte, telle que définie dans l'une quelconque des revendications 1 à 8,
a2) polymérisant le ou les précurseurs polymérisables de la première résine,
les étapes a1) et a2) formant un cycle pouvant être répété plusieurs fois,
b) Réalisation d'un premier traitement thermique à une première température T_{d} de manière à éliminer la première résine,
c) Réalisation d'un second traitement thermique à une deuxième température T_{f}, supérieure à la première température T_{d}, de manière à fritter les particules de titane pour obtenir une pièce en titane.

10. Procédé selon la revendication 9, **caractérisée en ce que** la couche de pâte formée à l'étape a1) à une épaisseur allant de 20µm à 200µm.

11. Procédé selon l'une des revendications 9 et 10, **caractérisé en ce que** l'étape a2) est réalisée sous irradiation UV pendant une durée inférieure à 30s, de préférence inférieure à 10s, et encore plus préférentiellement inférieure à 2s.

12. Procédé selon l'une quelconque des revendications 9 à 11, **caractérisé en ce que** la couche de pâte a une épaisseur allant de 30µm à 50µm et **en ce que** l'irradiation UV est réalisée pendant une durée de 0,5s à 1s.

13. Procédé selon l'une quelconque des revendications 9 à 12, **caractérisé en ce que** l'étape a2) est réalisée avec un laser ou par traitement numérique de la lumière.

## Patentansprüche

1. Paste zur Verwendung in einem Stereolithographieverfahren zur Herstellung eines Titanteils, enthaltend ein Pulver aus Titanteilchen, einen oder mehrere polymerisierbare Vorläufer eines ersten Harzes, einen Photoinitiator und ein optisches Additiv,
wobei das optische Additiv ausgewählt ist aus Polythiophen, Polyvinylalkohol, Polypropylen und einem zweiten, zuvor vernetzten und gemahlenen Harz vom Typ Acrylat,
wobei das optische Additiv 0,1 bis 20 Gew.-%, bezogen auf das Titanpulver, ausmacht.

2. Paste nach Anspruch 1,
**dadurch gekennzeichnet, dass** das optische Additiv in Form von Teilchen vorliegt, wobei die Teilchen eine größte Abmessung von weniger als 20 µm und vorzugsweise weniger als oder gleich 10 µm haben.

3. Paste nach dem vorhergehenden Anspruch,
**dadurch gekennzeichnet, dass** das optische Additiv in Form von Teilchen vorliegt, wobei die Teilchen eine größte Abmessung von weniger als oder gleich 2 µm haben.

4. Paste nach einem der vorhergehenden Ansprüche,
**dadurch gekennzeichnet, dass** das optische Additiv Polypropylen ist.

5. Paste nach einem der vorhergehenden Ansprüche,
**dadurch gekennzeichnet, dass** die Titanteilchen eine größte Abmessung von weniger als 45 µm und vorzugsweise weniger als 25 µm haben.

6. Paste nach einem der vorhergehenden Ansprüche,
**dadurch gekennzeichnet, dass** das Titanpulver mindestens 35 Vol.-% der Paste und vorzugsweise 40 bis 60 Vol.-% ausmacht.

7. Paste nach einem der vorhergehenden Ansprüche,
**dadurch gekennzeichnet, dass** der bzw. die polymerisierbaren Vorläufer des ersten Harzes vom Typ Acrylat, Urethanacrylat, aminmodifiziertes Polyetheracrylat, Epoxyacrylat oder Polyesteracrylat ist bzw. sind.

8. Paste nach einem der vorhergehenden Ansprüche,
**dadurch gekennzeichnet, dass** sie enthält:
- 40 bis 50 Vol.-% Pulver aus Titanteilchen,
- 40 bis 60 Vol.-% eines oder mehrerer polymerisierbarer Vorläufer eines ersten Harzes,
- 0,1 bis 10 Vol.-% Photoinitiator,
- 0,5 bis 10 Gew.-%, bezogen auf das Titanpulver, eines optischen Additivs, wobei das optische Additiv vorzugsweise Polypropylen oder ein zweites, zuvor vernetztes und gemahlenes Harz vom Typ Acrylat ist.

9. Verfahren zur Herstellung eines Titanteils, das zumindest die nachstehenden, aufeinanderfolgenden Schritte a), b), c) umfasst:
a) Formen eines Teils durch Stereolithographie, wobei das Formen erfolgt durch:
a1) Ausbilden einer Schicht aus einer Paste nach einem der Ansprüche 1 bis 8,
a2) Polymerisieren des bzw. der polymerisierbaren Vorläufer des ersten Harzes,
wobei die Schritte a1) und a2) einen Zyklus bilden, der mehrere Male wiederholt werden kann,
b) Durchführen einer ersten Wärmebehandlung bei einer ersten Temperatur T_{d}, um das erste Harz zu entfernen,
c) Durchführen einer zweiten Wärmebehandlung bei einer zweiten Temperatur T_{f}, die höher ist als die erste Temperatur T_{d}, um die Titanteilchen zu einem Titanteil zu sintern.

10. Verfahren nach Anspruch 9,
**dadurch gekennzeichnet, dass** die in Schritt a1) ausgebildete Pastenschicht eine Dicke von 20 µm bis 200 µm aufweist.

11. Verfahren nach einem der Ansprüche 9 und 10,
**dadurch gekennzeichnet, dass** Schritt a2) unter UV-Bestrahlung für eine Zeitdauer von weniger als 30 s, vorzugsweise weniger als 10 s und noch bevorzugter weniger als 2 s, ausgeführt wird.

12. Verfahren nach einem der Ansprüche 9 bis 11,
**dadurch gekennzeichnet, dass** die Pastenschicht eine Dicke von 30 µm bis 50 µm aufweist und dass die UV-Bestrahlung für eine Zeitdauer von 0,5 s bis 1 s durchgeführt wird.

13. Verfahren nach einem der Ansprüche 9 bis 12,
**dadurch gekennzeichnet, dass** Schritt a2) mit einem Laser oder durch digitale Lichtverarbeitung durchgeführt wird.

## Claims

1. A paste, for being used in a stereolithography method to manufacture a part of titanium, comprising a powder of titanium particles, one or more polymerisable precursors of a first resin, a photoinitiator and an optical additive,
the optical additive being selected from a polythiophene, a polyvinyl alcohol, a polypropylene, and a previously cross-linked and ground acrylate type second resin,
the optical additive accounting from 0.1% to 20% by weight based on the titanium powder.

2. The paste according to claim 1, **characterised in that** the optical additive is in the form of particles, particles having a largest dimension lower than 20µm, and preferably lower than or equal to 10µm.

3. The paste according to the previous claim, **characterised in that** the optical additive is in the form of particles, particles having a largest dimension lower than or equal to 2µm.

4. The paste according to any of the previous claims, **characterised in that** the optical additive is polypropylene.

5. The paste according to any of the previous claims, **characterised in that** particles of titanium have a largest dimension lower than 45µm, and preferably lower than 25µm.

6. The paste according to any of the previous claims, **characterised in that** the powder of titanium accounts for at least 35 volume % of the paste, and preferably from 40 to 60 volume %.

7. The paste according to any of the previous claims, **characterised in that** the one or more polymerisable precursors of the first resin are of the acrylate, urethane acrylate, amine-modified polyetheracrylate, epoxyacrylate or polyesteracrylate type.

8. The paste according to any of the previous claims, **characterised in that** it comprises:
- 40 to 50 volume % of powder of titanium particles,
- 40 to 60 volume % of one or more polymerisable precursors of a first resin,
- 0.1 to 10 volume % of photoinitiator,
- 0.5 to 10 weight % based on the titanium powder of optical additive, the optical additive being preferably polypropylene, or a previously cross-linked and ground acrylate type second resin.

9. A method for manufacturing a part of titanium comprising at least the following successive steps a), b), c) of:
a) shaping a part by stereolithography, shaping being performed by:
a1) forming a layer of paste, such as defined in any of claims 1 to 8,
a2) polymerising the polymerisable precursor(s) of the first resin,
steps a1) and a2) forming a cycle which can be repeated several times,
b) performing a first heat treatment at a first temperature T_{d} so as to remove the first resin,
c) performing a second heat treatment at a second temperature T_{f}, higher than the first temperature T_{d}, so as to sinter titanium particles to obtain a titanium part.

10. The method according to claim 9, **characterised in that** the layer of paste formed in step a1) has a thickness ranging from 20µm to 200µm.

11. The method according to one of claims 9 to 10, **characterised in that** step a2) is performed under UV irradiation for a duration lower than 30s, preferably lower than 10s, and even more preferentially lower than 2s.

12. The method according to any of claims 9 to 11, **characterised in that** the layer of paste has a thickness ranging from 30µm to 50µm and **in that** the UV irradiation is performed for a duration from 0.5s to 1s.

13. The method according to any of claims 9 to 12, **characterised in that** step a2) is performed with a laser or by digital light processing.
